Europäisches Patentamt

European Patent Office

Office européen des brevets

(11) Veröffentlichungsnummer: **0 053 645**

**A1**

(12) # EUROPÄISCHE PATENTANMELDUNG

(21) Anmeldenummer: **81100023.1**

(22) Anmeldetag: **05.01.81**

(51) Int. Cl.³: **B 65 H 63/02**
**G 01 B 11/04**

(30) Priorität: **05.12.80 CH 9005/80**

(43) Veröffentlichungstag der Anmeldung:
**16.06.82 Patentblatt 82/24**

(84) Benannte Vertragsstaaten:
**AT BE CH DE FR GB IT LI LU NL SE**

(71) Anmelder: **GEBRÜDER SULZER
AKTIENGESELLSCHAFT
Zürcherstrasse 9
CH-8401 Winterthur(CH)**

(72) Erfinder: **Zavodsky, Jan
Büelrainstrasse 5
CH-8400 Winterthur(CH)**

(74) Vertreter: **Dipl.-Ing. H. Marsch Dipl.-Ing. K. Sparing
Dipl.-Phys.Dr. W.H. Röhl
Rethelstrasse 123
D-4000 Düsseldorf(DE)**

(54) Fadenüberwachungsvorrichtung für Textilmaschinen.

(57) Die opto-elektrische Fadenüberwachungsvorrichtung weist eine Strahlungsquelle (1) auf, deren Strahlung mittels zwei gekreuzter Polarisationsfilter (4, 6) polarisiert wird, sodass ein Dunkelfeld entsteht und keine Strahlung den Strahlungsempfänger (7) erreicht. Ein durchsichtiger Faden (11) verursacht örtlich ein zusätzliches Verdrehen der Polarisationsebene, wodurch der Faden (11) wie eine helle Zone im Dunkelfeld in Erscheinung tritt. Der Strahlungsempfänger (7) löst nun kein Stellsignal zum Abstellen der Maschine (10) aus. Bei Abwesenheit des Fadens veranlasst der Strahlungsempfänger (7) über eine Schaltvorrichtung (8) ein Stellsignal für das Stellglied (9) zum Abstellen der Maschine (10).

Fig. 1

EP 0 053 645 A1

Gebrüder Sulzer Aktiengesellschaft, Winterthur/Schweiz

Fadenüberwachungsvorrichtung für Textilmaschinen

Die Erfindung betrifft eine opto-elektrische Fadenüberwachungsvorrichtung, insbesondere für Textilmaschinen, mit einer Quelle von quer zur Fadenbahn auf einen Strahlungsempfänger gerichteten Strahlung, welchem Strahlungsempfänger Schaltmittel zugeordnet sind, zum Erzeugen eines Stellsignals bei Abwesenheit des Fadens.

Eine bekannte Vorrichtung dieser Art weist den Nachteil auf, dass sie zur Ueberwachung sehr dünner und durchsichtiger Fäden wenig geeignet ist, da dabei keine zuverlässig auswertbare Stellsignale gebildet werden.

Der Erfindung liegt die Aufgabe zugrunde, eine Fadenüberwachungsvorrichtung der eingangs definierten Art zu schaffen, mit der die zuverlässige Ueberwachung durchsichtiger Fäden möglich ist. Gemäss der Erfindung sind zur Lösung dieser Aufgabe die im kennzeichnenden Teil des Anspruchs 1 angegebenen Gestaltungsmerkmale vorgesehen; der Unteranspruch betrifft eine vorteilhafte Weiterbildung.

Gemäss der Erfindung verläuft die Fadenbahn zwischen zwei gekreuzten Polarisationsfiltern, dessen Dunkelfeld von einem Strahlungsempfänger überwacht wird. Ein durchsichtiger Faden verursacht örtlich ein zusätzliches Verdrehen der Polarisationsebene. Der Faden tritt dadurch wie eine helle Zone im Dunkelfeld in Erscheinung und der Strahlungsempfänger löst nun kein Stellsignal für die Maschine aus. Bei Abwesenheit des Fadens veranlasst der Strahlungsempfänger ein Stellsignal zum Abstellen der Maschine.

Ein Ausführungsbeispiel des Erfindungsgegenstandes ist nachfolgend anhand der Zeichnung erklärt. Es zeigt in schematischer Darstellung:

Fig. 1 eine Fadenüberwachungsvorrichtung gemäss der Erfindung;

Fig. 2 den Verlauf der Strahlung für undurchsichtige Fäden mit rauher Oberfläche.

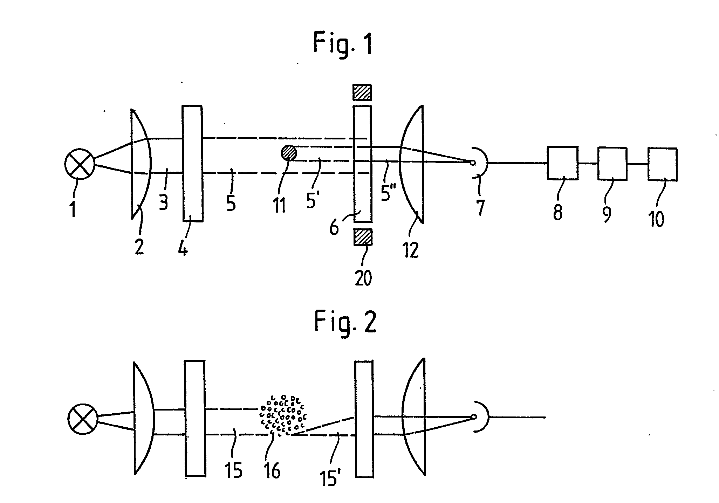

Nach Fig. 1 wird die Strahlung einer Strahlungsquelle 1 von einer Kondensorlinse 2 zu einem parallelen Strahlenbündel 3 gebündelt und auf ein Polarisationsfilter 4 gerichtet. Das polarisierte Strahlenbündel 5 erreicht ein zweites Polarisationsfilter 6, das um 90° gegenüber dem ersten Polarisationsfilter 4 gedreht ist. Es entsteht durch die zweimalige Polarisation ein sogenanntes Dunkelfeld hinter dem Polarisationsfilter 6, d. h. es erreicht keine Strahlung der Strahlungsquelle 1 einen hinter dem Polarisationsfilter 6 aufgestellten Strahlungsempfänger 7, z. B. eine Fotozelle. Der Strahlungsempfänger 7 ist mit einer Schaltvorrichtung 8 verbunden, die ein Stellsignal für ein Stellglied 9 einer Maschine 10 erzeugen kann. Ist ein Faden vorhanden, bleibt die Maschine in Betrieb; ist kein Faden vorhanden, wird sie abgestellt. Es sei noch bemerkt, dass die Polarisationsfilter 4 und 6 auch weniger als 90° gekreuzt sein können.

Die Vorrichtung arbeitet wie folgt:

Durchquerst ein durchsichtiger Faden 11 auf seiner Bahn das polarisierte Strahlenbündel 5, so verursachen die im Fadenmaterial vorhandenen strukturellen Unregelmässigkeiten ein jeweiliges zusätzliches Verdrehen der Polarisationsebene des betreffenden Teilgebietes 5' des Strahlenbündels 5. Aus dem Polarisationsfilter 6 tritt daher ein Teilstrahlenbündel 5'', das wie eine helle Zone im Dunkelfeld in Erscheinung tritt. Die helle Zone wird von einer Linse 12 auf den Strahlungsempfänger 7 konzentriert. Der Strahlungsempfänger 7 ist so im Schaltkreis der Schaltvorrichtung 8 aufgenommen, dass diese kein Stellsignal für das Stellglied 9 erzeugt, sodass die Maschine in Betrieb bleibt.

Befindet sich kein Faden im Strahlenbündel 5, so bleibt das Dunkelfeld hinter dem Polarisationsfilter 6 vollständig erhalten und die Schaltvorrichtung 8 erzeugt ein Stellsignal für das Stellglied 9, das die Maschine 10 ausschaltet.

Ausser für durchsichtige Fäden ist die Vorrichtung auch geeignet zum Ueberwachen von undurchsichtigen Fäden, sofern diese eine rauhe Oberfläche haben, wie dies bei Wolle-und Baumwolle der Fall ist. Wie Fig. 2 zeigt, wird ein polarisiertes Strahlenbündel 15 am Umfang eines solchen zu überwachenden Fadens 16 gebeugt, was ebenfalls eine Verdrehung der Polarisationsebene des Teilstrahlenbündels 15' zur Folge hat. Auch in diesem Fall zeigt sich der Faden wie eine helle Zone im Dunkelfeld, sodass die Maschine nicht abgeschaltet wird.

Es ist möglich, die beschriebene Vorrichtung auch zum Ueberwachen von undurchsichtigen Fäden mit glatter Oberfläche geeignet zu machen. Dazu ist das Polarisationsfilter 6 in Fig. 1 in einem Ring 20 drehbar angeordnet. Sind solche Fäden zu überwachen, so wird das zweite Polarisationsfilter 6 in die Normalstellung, d. h. nicht gegenüber dem ersten Polarisationsfilter 4 verdreht, gestellt. Das austretende Strahlenbündel ist somit nur vom ersten Polarisationsfilter 4 polarisiert und es bildet sich folglich kein Dunkelfeld. Die Anordnung wirkt wie eine gewöhnliche Lichtschranke. Ist ein Faden vorhanden, unterbricht dieser das Strahlenbündel 5 und die Maschine bleibt eingeschaltet. Ist kein Faden vorhanden, so wird die Maschine abgestellt. Statt Zurückdrehung des zweiten Polarisationsfilters 6 kann das erste Polarisationsfilter 4 hinsichtlich des zweiten Polarisationsfilters 6 zurückgedreht werden, mit dem selben Endeffekt.

Die Fadenüberwachungsvorrichtung wurde hier für Textilmaschinen beschrieben. Sie ist selbstverständlich auch für andere Maschinen, die Fäden herstellen oder bearbeiten, geeignet.

Patentansprüche

1. Opto-elektrische Fadenüberwachungsvorrichtung, insbesondere für Textilmaschinen, mit einer Quelle von quer zur Fadenbahn auf einen Strahlungsempfänger gerichteten Strahlung, welchem Strahlungsempfänger Schaltmittel zugeordnet sind zum Erzeugen eines Stellsignals bei Abwesenheit des Fadens, dadurch gekennzeichnet, dass die Fadenbahn zwischen zwei im Strahlengang angeordneten, gekreuzten Polarisationsfiltern (4, 6) verläuft.

2. Vorrichtung nach Anspruch 1, dadurch gekennzeichnet, dass eines der Polarisationsfilter (4, 6) drehbar angeordnet ist.

1/1

0053645

Fig. 1

Fig. 2

**0053645**

Nummer der Anmeldung

**EP 81 10 0023**

Europäisches
Patentamt

**EUROPÄISCHER RECHERCHENBERICHT**

| | **EINSCHLÄGIGE DOKUMENTE** | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| X | GB - A - 627 228 (BRITISH CELLO-PHANE LTD.)<br><br>* Insgesamt *<br><br>-- | 1 | B 65 H 63/02<br>G 01 B 11/04 |
| A | DE - A - 2 123 641 (S.K.F.)<br><br>* Insgesamt *<br><br>---- | | |

**RECHERCHIERTE SACHGEBIETE (Int Cl.)**

B 65 H
G 01 B

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie. übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03-03-1981 | DEPRUN |

EPA form 1503.1 06.78